(19) **Europäisches Patentamt**

**European Patent Office**

**Office européen des brevets**

(11) Veröffentlichungsnummer: **0 259 623 B1**

(12) **EUROPÄISCHE PATENTSCHRIFT**

(45) Veröffentlichungstag der Patentschrift: **03.02.93**

(21) Anmeldenummer: **87111496.3**

(22) Anmeldetag: **08.08.87**

(51) Int. Cl.⁵: **C08F 279/02**, //C08L25:08,
(C08F279/02,212:08)

(54) **Schlagfeste thermoplastische Formmasse.**

(30) Priorität: **14.08.86 DE 3627639**

(43) Veröffentlichungstag der Anmeldung:
**16.03.88 Patentblatt 88/11**

(45) Bekanntmachung des Hinweises auf die
Patenterteilung:
**03.02.93 Patentblatt 93/05**

(84) Benannte Vertragsstaaten:
**BE DE FR GB IT NL**

(56) Entgegenhaltungen:
**EP-A- 0 143 500**
**FR-A- 2 281 380**
**GB-A- 2 068 392**
**US-A- 4 593 063**

(73) Patentinhaber: **BASF Aktiengesellschaft**
**Carl-Bosch-Strasse 38**
**W-6700 Ludwigshafen(DE)**

(72) Erfinder: **Bueschl, Rainer, Dr.**
**Hollandstrasse 14**
**W-6701 Roedersheim-Gronau(DE)**
Erfinder: **Echte, Adolf, Dr.**
**Leuschnerstrasse 42**
**W-6700 Ludwigshafen(DE)**

EP 0 259 623 B1

**Beschreibung**

Die Erfindung betrifft eine thermoplastische, schlagfeste Formmasse, die für Anwendungen geeignet ist, in denen hoher Oberflächenglanz gewünscht ist. Sie zeichnet sich außerdem durch eine erhöhte Transluzenz aus. Die Formmasse ist aufgebaut aus einer Hartmatrix aus dem Polymeren eines Monovinylaromaten mit einem Anteil von 60 bis 95 Gew.%, bezogen auf die Formmasse. In dieser Formmasse ist eine Weichphase verteilt in einem Anteil von 5 bis 40 Gew.%, bezogen auf die Formmasse, die eine mittlere Teilchengröße im Bereich von 0,01 bis 0,30 $\mu$m aufweist. Diese Weichphase stellt ein Pfropfmischpolymerisat aus dem (den) Monomeren der Hartmatrix und einem elastomeren Polymerisat dar.

Zum Stand der Technik nennen wir: (1) A. Echte; Ang. Makr. Chem. 58/59, 175 (1977), (2) EP-A-143 500, DE-A-34 09 656 (3), und die nicht vorveröffentlichte EP-A-196 013 (4) (vergl. unten).

In (1) wird die Morphologie von schlagfestem, d.h. kautschukmodifiziertem Polystyrol behandelt. Demnach ist die Domänenstruktur der Kautschukphase unmittelbar vor der Phaseninversion für die Ausbildung des jeweiligen Teilchentyps entscheidend. Die Domänenstruktur selbst ist wiederum von der Zusammensetzung der Weichkomponente abhängig, d.h. entscheidend für die Morphologie ist der Anteil an Block-Polystyrol und/oder an auf gepfropftem Polystyrol unmittelbar vor der Phaseninversion. Die verschiedenen Kautschukpartikeltypen werden klassifiziert als Zellenteilchen, Knäuelteilchen, Kapselteilchen, Fadenteilchen und Tropfenteilchen. Der letztgenannte Teilchentyp entsteht, wenn der Polystyrolgehalt der Weichkomponente zum Zeitpunkt der Phaseninversion größer ist als 85 Gew.%. Dies kann realisiert werden, indem entweder Styrol-Butadien-Zwei-Blockcopolymere mit entsprechend hohem Styrolgehalt eingesetzt werden oder indem die Pfropfung auf die Weichkomponente unter sehr effizienten Bedingungen durchgeführt wird. Am geeignetsten ist der Einsatz von Styrol-Butadien-Zwei-Blockcopolymeren mit einem Styrolgehalt von über 70 Gew.%. Dieser Kautschuk wird in Styrol gelöst. Anschließend führt man eine thermische oder radikalisch initiierte Polymerisation dieser Lösung durch, wobei Polystyrol noch zusätzlich auf das Zwei-Blockcopolymere aufgepfropft wird. Es resultiert schlagfestes Polystyrol mit Tropfenteilchen-Morphologie. Aufgrund der sehr geringen Teilchengröße der Weichkomponente (<0,3 $\mu$m), die im Bereich von gepfropften Emulsionskautschuken liegt, besitzen die Produkte einen hohen Glanz und erhöhte Transluzenz.

Nachteilig ist bei der in (1) beschriebenen Art, zu hochglänzendem, transluzentem und schlagfestem Polystyrol zu gelangen, die Tatsache, daß verhältnismäßig große Mengen des Styrol-Butadien-Zwei-Blockcopolymeren eingesetzt werden müssen, um eine ausreichende Schlagfestigkeit des Produktes zu gewährleisten. Denn für die Schlagfestigkeit ist u. a. der Anteil an Polybutadien - frei oder chemisch gebunden - im Endprodukt ausschlaggebend. Um z.B. 9 Gew.% Polybutadien im Endprodukt zu erhalten, müssen 30 Gew.% eines Styrol enthaltenden Styrol-Butadien-Zwei-Blockcopolymeren eingesetzt werden. Dies führt zu einer entsprechenden Verteuerung der gewünschten Formmassen.

Die Methode gemäß (2) führt zu FORMMASSEN, DEREN KAUTSCUKANTEIL AUS KAPSELTEILCHEN BESTEHT die sich für glatte, glänzende Oberfläche eignen. Die Durchsichtigkeit (Transparenz) der bekannten Massen erscheint jedoch noch verbesserungsfähig.

In dem Dokument (3) ist eine Verfahren zur Herstellung schlagfester und zugleich transluzenter Polystyrole beschrieben, wobei als Elastomeres Mischungen aus Polybutadien und Styrol-Butadien-Zwei-Blockcopolymerisaten verwendet werden, WOBEI DIE WEICHPHASE IN FORM VON KAPSELTEILCHEN VORLIEGT Im Falle des unter (4) genannten Verfahrens wird eine Weichphase erhalten, die überwiegend aus Tropfenteilchen besteht. Um eine solche Morphologie zu erhalten, war es jedoch erforderlich, eine Mischung von zwei Kautschuken zu verwenden.

Es bestand daher die Aufgabe, schlagfestes Polystyrol mit Tropfenteilchen-Morphologie herzustellen, das ohne die teureren Stvrol-Butadien-Zwei-Blockcopolymere auskommt und dennoch mechanisch hochwertig ist.

Die Erfindung betrifft daher eine schlagfeste thermoplastische Formmasse, enthaltend, jeweils bezogen auf die Formmasse aus A + B,

A) eine Hartmatrix aus mindestens einem Polymeren eines Monovinylaromaten in einem Anteil von 60 bis 95 Gew.% und

B) eine darin verteilte Weichphase in einem Anteil von 5 bis 40 Gew.%, mit der Maßgabe, daß

die Weichphase aus Tropfenteilchen besteht, die eine mittlere Teilchengröße, bestimmt als d-Wert des Volumenmittels, zu mehr als 80 % (Zahlenmittel) im Bereich von 0,01 bis 0,3 $\mu$m aufweisen, und wobei die Weichphase mindestens ein Pfropfmischpolymerisat aus dem das Polymere der Hartmatrix aufbauenden Monomeren und einem elastomeren Polymerisat darstellt, wie sie erhalten wird durch mit peroxidischen Initiatoren gestartete radikalische Polymerisation des die Hartmatrix A aufbauenden monovinylaromatischen Monomeren in Gegenwart von ausschließlich Homopoly-

2

butadien, das ein mittleres Molekulargewicht (Gewichtsmittel) von 35.000 bis 100.000 aufweist, in der Weise, daß in einer ersten Stufe innerhalb von 3 bis 6 Stunden bei einer Temperatur von 50 bis 200°C in Lösung unter Rühren bis zu einem Umsatz von 20 bis 40 % und Phasenumkehr und danach in einer zweiten Stufe in wäßriger Suspension polymerisiert wird.

Nachstehend werden die am Aufbau der erfindungsgemäßen Formmasse beteiligten Komponenten, d.h. insbesondere die Morphologie der erfindungsgemäßen Formmasse, sowie das Verfahren zu deren Herstellung und die dafür erforderlichen Ausgangsstoffe und Hilfsmittel beschrieben.

Komponente A

Die erfindungsgemäße Formmasse ist aus einer Hartmatrix aus dem Polymeren eines monovinylaromatischen Monomeren aufgebaut. Diese Hartmatrix macht, bezogen auf die Formmasse, aus den Komponenten A + B, 60 bis 95 Gew.%, aus. Als vinylaromatisches Monomeres zum Aufbau der Hartmatrix kommt insbesondere Styrol in Frage. Es können jedoch auch α-Methylstyrol oder p-Methylstyrol oder Mischungen substituierter Styrole verwendet werden; bevorzugt ist jedoch die ausschließliche Verwendung von Styrol, so daß die Hartmatrix bevorzugt aus Polystyrol besteht.

Die Hartmatrix entsteht in an sich bekannter Weise bei der Herstellung der Formmasse dadurch, daß die Komponente B, d.h. der dieser zugrundeliegende Kautschuk, nämlich Polybutadien in Gegenwart des die Hartmatrix später aufbauenden Monomeren mit Initiatoren radikalisch gestartet und polymerisiert wird. Dabei bildet sich ein Pfropfmischpolymerisat des Kautschuks (Weichphase) und der ungepropfte Teil, die Hartmatrix. Die Hartmatrix kann Viskositätszahlen, $V_z$, im Bereich von 50 bis 140, insbesondere im Bereich von 70 bis 120 aufweisen. Dies entspricht mittleren Molgewichten ($\overline{M}_w$) im Bereich von 100.000 bis 350.000, insbesondere 150.000 bis 300.000.

Komponente B

Die erfindungsgemäße Formmasse weist als Komponente B eine Weichphase auf, die fein dispergiert in der Hartmatrix vorliegt. Die Art und Weise, wie eine Weichphase in einer Hartmatrix dispergiert werden kann, ist dem Fachmann geläufig. Die Weichphase ist in einem Anteil von 5 bis 40 Gew.%, vorzugsweise von 5 bis 30 Gew.%, in der Hartmatrix vorhanden. Außerdem weist diese Weichphase eine mittlere Teilchengröße im Bereich von 0,01 bis 0,30 μm. vorzugsweise im Bereich von 0,02 bis 0,20 μm auf. Bei dem genannten Teilchengrößenbereich handelt es sich um die mittlere Teilchengröße.

Die mittlere Teilchengröße (Gewichtsmittel) der dispersen Weichkomponenten-Phase wurde bestimmt durch Auszählen und Mitteln der zur gleichen Größenklasse (konst. Intervallbreite) gehörigen Teilchen aus elektronenmikroskopischen Dünnschichtaufnahmen. Mit den Volumina der Teilchen (3. Potenz des scheinbaren Durchmessers) innerhalb der Intervalle wird die Verteilungssummenkurve bestimmt. Beim 50 %-Ordinatenwert kann auf die Abszisse der Äquivalentdurchmesser dann abgegriffen werden. Die angegebenen mittleren Durchmesser stellen dabei einen Mittelwert von mindestens 5000 Teilchen dar.

Bei der Weichphase handelt es sich somit um ein Pfropfmischpolymerisat aus dem(n) Monomeren der Hartmatrix, d.h. insbesondere von Styrol, auf Polybutadien.

Als die Weichphase aufbauende Komponente ist somit ausschließlich Polybutadien bzw. dessen Pfropfmischpolymerisat mit vorzugsweise Styrol zu nennen. Als Grundlage der Pfropfung sind Polybutadiene geeignet vom medium- oder high-cis-Typ mit Molekulargewichten im Bereich von 35.000 bis 100.000. (Gewichtsmittel) vorzugsweise werden medium-cis-Polybutadiene mit Molekulargewichten von 40.000 bis 100.000 eingesetzt. In der Regel entstehen praktisch ausschließlich Tropfenteilchen als Weichphase, wenn man Molekulargewichte im angegebenen Bereich verwendet. Im Bereich oberhalb von 100.000 für das Molekulargewicht entstehen zunehmend geringere Anteile an Kapselteilchen. Die Menge der Kapselteilchen hängt aber auch etwas von den Verfahrensbedingungen ab.

Der Polybutadiengehalt liegt im Bereich von 3 bis 25 Gew.%, bevorzugt von 6 bis 15 Gew.%, jeweils bezogen auf die Formmasse.

Die erfindungsgemäße Formmasse hebt sich durch eine besondere Morphologie von bekannten Formmassen ab. So zeigt die erfindungsgemäße Formmasse eine dispergierte Weichphase, die mehr als 80 %, vorzugsweise mehr als 90 % (Zahlenmittel) Tropfenteilchen, feststellbar auf einer Elmi-Aufnahme, aufweist. Es handelt sich bei den Tropfenteilchen um kugelförmige oder leicht elliptische Teilchen, die kein eingeschlossenes (okkludiertes) Polystyrol enthalten. Sie sind vollständig mit Kautschuk aufgefüllt. Unter Tropfenteilchen im Sinne der vorliegenden Erfindung werden Teilchen im Größenbereich von 0,01 bis 0,30 μm, vorzugsweise von 0,2 bis 0,20 μm, verstanden.

EP 0 259 623 B1

Aufbau der erfindungsgemäßen Formmasse

Die Herstellung der erfindungsgemäßen Formmasse erfolgt durch Polymerisation des die Hartmatrix aufbauenden Monomeren, d.h. insbesondere von Styrol in Gegenwart von Polybutadien. Die Polymerisation wird unter Verwendung der üblichen peroxidischen Initiatoren durchgeführt. Sie kann kontinuierlich oder diskontinuierlich durchgeführt werden, wobei die diskontinuierliche Verfahrensführung bevorzugt ist. Bevorzugt ist ferner die Durchführung in einem Zweistufenverfahren, wobei die erste Verfahrensstufe in Masse, gegebenenfalls unter Verwendung eines Lösungsmittels erfolgt und die zweite Stufe in Suspension durchgeführt wird. Verfahren zur kontinuierlichen Durchführung sind in der DE-AS 17 70 392 (Rührkessel-Turmkaskade) hinreichend beschrieben, so daß der Verweis auf diese Druckschrift genügen mag. Ein diskontinuierliches Verfahren zur Herstellung von transluzentem, schlagfestem Polystyrol ist in der DE-AS 26 13 352 beschrieben, so daß der Fachmann darauf zurückgreifen kann.

Bei dem bevorzugten, diskontinuierlichen Verfahren wird in erster Stufe in Gegenwart von peroxidische Radikale bildenden Initiatoren polymerisiert. Als solche Initiatoren kommen solche aus der Gruppe der Alkyl- oder Acylperoxide, wie Hydroperoxide, Perester oder Peroxicarbonate in Betracht. Vorzugsweise werden die pfropfaktiven Initiatoren Dibenzoylperoxid, tert.-Butylperoxi-2-ethylhexanoat oder das tert.-Butylperbenzoat angewendet. Die Initiatoren werden in Mengen von 0,02 bis 0,2 Gew.%, bezogen auf die Monomeren, angewendet. Die Anwendung von Initiatoren ist dem Fachmann bekannt; es ist ihm außerdem bekannt, den Zerfall der Initiatoren entweder durch Zusätze wie Amine, oder aber durch Wahl geeigneter Temperaturintervalle zu beschleunigen, um die Pfropfaktivität zu erhöhen.

Das erfindungsgemäße Verfahren kann in Gegenwart von Kettenüberträgern durchgeführt werden. Es kommen hierzu die üblicherweise verwendeten Mercaptane mit 4 bis 18 C-Atomen in Betracht. Von den genannten Mercaptanen haben sich besonders das n-Butylmercaptan, das n-Octylmercaptan sowie das n- oder t-Dodecylmercaptan bewährt. Die Mercaptane werden in Mengen von 0,01 bis 0,3 Gew.%, bezogen auf die Monomeren angewendet. Vorzugsweise werden keine Regler angewendet.

Das erfindungsgemäße Verfahren kann in Gegenwart von Schmiermitteln, insbesondere von Mineralölen, durchgeführt werden. Vorzugsweise werden diese Mittel bereits dem Reaktionsansatz zugesetzt. In Betracht kommen insbesondere Weißöle, d.h. aromatenarme technische Weißöle bzw. aromatenfreies medizinisches Weißöl; letzteres insbesondere, wenn die nach dem Verfahren enthaltenen schlagzähen Polystyrole zur Herstellung von Formteilen Verwendung finden, die den lebensmittelgerechten Bedingungen im Verpackungssektor genügen müssen. Auch Stabilisatoren können während der Polymerisation zugegen sein. In Betracht kommen vor allem die dem Fachmann bekannten sterisch gehinderten Phenole in üblichen Mengen.

Bei dem Verfahren wird in der ersten Stufe innerhalb von 3 bis 6 Stunden bis zu einem Umsatz von 20 bis 40 %, vorzugsweise von 25 bis 35 %, bezogen auf das Monomere polymerisiert. Die Polymerisation wird bei erhöhter Temperatur durchgeführt, wobei darunter Temperaturen im Bereich von 50 bis 200°C, insbesondere im Bereich von 60 bis 150°C zu verstehen sind. Der Fachmann weiß, wie er bei bestimmter Verfahrensführung aus den genannten Temperaturintervallen die für das Verfahren erforderliche Temperatur bei Verwendung bestimmter Initiatoren oder bei Zielrichtung bestimmter Produkte herauszuwählen hat. Das Verfahren kann isothermisch oder mit einem Temperaturprofil betrieben werden.

Die erste Stufe wird in einem Reaktor unter Rühren durchgeführt, wobei die Polymerisation so abläuft, daß nach einem bestimmten Umsatz sich zwei Phasen ausbilden, nämlich eine kohärente Kautschuk-Styrol-Phase und eine nichtkohärente Polystyrol-Styrol-Phase. Bei Steigerung des Umsatzes tritt eine Phasen-version ein, wobei nun die Polystyrol-Phase kohärent und die Kautschuk-Styrol-Phase nichtkohärent ist.

Solche Vorgänge sind bekannt und beispielsweise in Echte, Haaf, Hambrecht; Angew. Chemie 93 (4), 372-388 (1981) beschrieben. Nach der Phaseninversion muß weiter gerührt werden, also durch geeignete, dem Fachmann bekannte Scherbedingungen die jeweils angestrebte mittlere Teilchengröße erreicht werden. Die hierfür erforderlichen Scherbedingungen sind abhängig u.a. von der gegebenen Reaktorgröße, dem Füllgrad, der Art der Füllung und der Viskosität sowie der Art des Rührorgans. Die Scherbedingungen können vom Fachmann anhand weniger Versuche festgelegt werden. Hierzu finden sich Hinweise in Freeguard; J. Appl. Pol. Sci. 15, 1649 (1971).

Die Scherbedingungen werden so gewählt, daß sich innerhalb des modifizierten Polystyrols eine dispergierte Weichkomponente ausgebildet hat mit einem mittleren Teilchendurchmesser von 0,01 bis 0,3 $\mu$m. Es ist hierbei der $d_{50}$-Wert als Volumenmittel zu verstehen, wie es durch die bereits beschriebene Bildanalyse bestimmt wird. Vorzugsweise kann die mittlere Teilchengröße auch im Bereich von 0,1 bis 0,2 $\mu$m liegen. Das Ergebnis der Polymerisation der ersten Stufe ist ein Reaktionsprodukt, worin ein Pfropfmischpolymerisat von Styrol auf das kautschukartige Polymerisat, das die Weichphase bildet, enthalten ist. Diese Weichphase ist in der Hartmatrix, also dem Polystyrol, fein verteilt und kann auf Elmi-Aufnahmen von

4

Dünnschnitten dargestellt werden. Die Teilchen sind sogenannte Tropfenteilchen. Sie stellen kompakte Kautschukkügelchen dar, die auch elliptische Form haben können und keine Polystyroleinschlüsse enthalten.

Das Reaktionsprodukt der ersten Stufe wird nun in einer zweiten Stufe in wäßriger Suspension zu Ende polymerisiert. Die wäßrige Phase der Suspension beträgt das 0,75- bis 2-fache der Phase des Reaktionsproduktes der ersten Stufe. Die wäßrige Phase enthält die üblichen wasserlöslichen Suspensionsmittel, wie Methylcellulose, Oxypropylcellulose, Polyvinylalkohol, Polyvinylpyrrolidon oder auch unlösliche anorganische Dispergiermittel wie Bariumsulfat. Bei löslichen Dispergiermitteln verwendet man im allgemeinen zwischen 0,05 bis 2 Gew.% des Mittels, bezogen auf die Dispersion. Der Reaktor wird in der zweiten Phase ebenfalls gerührt, so daß sich ein Perlpolymerisat ausbildet. Derartige Arbeitsweisen sind bekannt. Sie sind beispielsweise in DE-AS 26 13 352 beschrieben. Die Polymerisation wird in einem Temperaturbereich von 50 bis 200°C vorgenommen. Man kann isotherm polymerisieren aber auch mit ansteigendem Temperaturprofil. Es ist erforderlich, dem Reaktionsansatz vor dem Dispergieren einen in Radikale zerfallenden Initiator zuzusetzen. In Frage kommen die gleichen Initiatoren, wie sie oben bei der Schilderung der ersten Verfahrensstufe verwendet werden. Im allgemeinen wird so gearbeitet, daß 0,01 bis 0,30 Gewichtsteile Initiator, bezogen auf die Monomeren in der ersten Verfahrensstufe und 0,01 bis 0,20 Gewichtsteile, bezogen auf die Gewichtsteile der Monomeren in der zweiten Verfahrensstufe Verwendung finden.

Im Anschluß an die Polymerisation wird das Polymerisat in üblicher Weise gewonnen. Dies kann z.B. durch Entgasen der Mischung auf einem Entgasungsextruder entstehen, indem das Reaktionsprodukt von überschüssigem Styrol und gegebenenfalls von Lösungsmittel befreit wird. Man wählt dabei Temperaturen von 180 bis 260°C und in der letzten Entgasungsstufe Drücke von 2 bis 80 mbar an.

Die nach dem erfindungsgemäßen Verfahren erhaltenen schlagfesten und gegebenenfalls transluzenten Polystyrole können nach den für Thermoplaste bekannten Verfahren verarbeitet werden, z.B. durch Extrudieren, Spritzgießen, Kalandrieren, Hohlkörperblasen, Pressen oder Sintern. Besonders bevorzugt werden aus dem nach dem erfindungsgemäßen Verfahren hergestellten Produkten geformte Gebilde durch Spritzgießen hergestellt. Insbesondere eignen sich transluzente Produkte zur Herstellung von Folien für den Verpackungssektor, z.B. solche, die im Nahrungsmittelbereich Verwendung finden.

Für die Herstellung der Formmasse der vorliegenden Erfindung können zusätzlich zu den bekannten Hilfsmitteln, wie Mineralöle, Molekulargewichtsregler, und Antioxidantien, ferner noch Gleitmittel, wie Zinkstearat und andere Stearate bzw. andere übliche Hilfsmittel verwendet werden. Auch für die Verarbeitung der erhaltenen Reaktionsprodukte kann der Fachmann die bekannten Zusatzstoffe verwenden. Als solche seien genannt für die Herstellung von Formteilen aus der Formmasse: Farbstoffe, Antioxidantien, Stabilisatoren, eventuell Flammschutzmittel in den dem Fachmann geläufigen Mengen.

Die in den Beispielen und Vergleichsversuchen beschriebenen Parameter wurden wie folgt bestimmt:

1. Lochkerbschlagzähigkeit, $a_{KL}$, in kJ/m$^2$ nach DIN 53 753
2. Reißdehnung in % nach DIN 53 455
3. Streckspannung in N/mm$^2$ nach DIN 53 455
4. Vicattemperatur in °C nach DIN 53 460
5. Transluzenz

Zur Bewertung der Transluzenz der beim erfindungsgemäßen Verfahren erhaltenen Produkte wird zunächst eine Skala erstellt. Diese Skala umfaßt die Werte 1 bis 9 in der folgenden Tabelle 1, wobei die niedrigeren Werte eine gute Transluzenz repräsentieren. Um die in der Tabelle 1 angeführten Werte zu erzielen, wurde ein handelsübliches schlagfestes Polystyrol (Produkt A), das 15 Gew.% eines Styrol-Butadien-Blockkautschuks mit Kapselteilchenmorphologie (Typ Buna BL 6533) mit 60 Gew.% Butadien enthielt, zugrundegelegt (Benotung 4). Abmischungen dieses Produktes A in den in der Tabelle 1 genannten Gewichtsverhältnissen mit Standardpolystyrol der VZ 96 [ml/g] ergaben die Werte von 3 bis 1 für die Transluzenz. Durch Abmischung des genannten Standardpolystyrols mit einem schlagfesten Polystyrol mit Zellenteilchenmorphologie (Produkt B: Polystyrol 476 L der BASF; Handelsprodukt; thermisch hergestellt), das 8 Gew.% Polybutadien enthält, wurden höhere Werte der Transluzenz erzielt; vgl. die Werte 5 bis 9 in der Tabelle.

Von Proben der erfindungsgemäßen Produkte der Beispiele und der Vergleichsversuche wurden Preßplättchen hergestellt und visuell mit den entsprechenden Preßplättchen des Standards der Skala verglichen.

Tabelle 1

| Note für die Transluzenz | Produkt A | Abmischung in Gew.-Teilchen Standardpolystyrol | Produkt B |
|---|---|---|---|
| 1 | 20 | 80 | 0 |
| 2 | 40 | 60 | 0 |
| 3 | 60 | 40 | 0 |
| 4 | 100 | 0 | 0 |
| 5 | 96 | 0 | 4 |
| 6 | 92 | 0 | 8 |
| 7 | 88 | 0 | 12 |
| 8 | 84 | 0 | 16 |
| 9 | 80 | 0 | 20 |

Demnach nimmt die Transluzenz von 9 nach 1 hin zu.

6. Von den Proben der Beispiele und Versuche wurden in bekannter Weise elektronenmikroskopische Dünnschichtaufnahmen angefertigt, die zur Bestimmung der Teilchengröße, Verteilung und Zahlenmittel der Weichphase dienen.

7. Die Bestimmung der Viskositätszahl, VZ, der Hartmatrix erfolgt analog DIN 53 726. An 0,5 g Material in 100 ml Toluol wird bei 25°C die rel. Viskosität gemessen.

Die Erfindung wird nachstehend anhand von Beispielen und Vergleichsversuchen näher erläutert. Alle darin angegebenen Teile und Prozente beziehen sich, sofern nichts anderes vermerkt ist, auf das Gewicht.

Beispiele 1 und 2 und Vergleichsversuche I bis IV

Zur Durchführung der Beispiele und von Vergleichsversuchen wurden folgende durch anionische Polymerisation von Butadien in Hexan mit sec.Butyllithium hergestellte Polybutadiene verwendet:

| | Molgewicht (Gewichtsmittel) |
|---|---|
| $b_1$ | 36.000 |
| $b_2$ | 99.000 |
| $b_3$ | 170.000 |
| $b_4$ | 260.000 |

Zur Durchführung der Versuche wurden jeweils 8 Gew.-Teile Polybutadien, der in der Tabelle 2 genannten Art, 89,7 Gew.-Teile Styrol und 2,3 Gew.-Teile eines medizin. Weißöls in den nachfolgend beschriebenen Reaktionskessel vorgelegt (Summe des Ansatzes = 1,2 kg). Außerdem wurden dem Reaktionsansatz zusätzlich noch 0,12 Teile eines sterisch gehinderten Phenoles als Stabilisator (®Irganox 1076) zugefügt.

In einem mit einem Anker-Rührer ausgestatteten Kessel mit einem Fassungsvermögen von 5 Litern wurden die genannten Ausgangsmischungen jeweils bei 86°C isotherm und bei 200 Rührerumdrehungen/Minute bis zu einem Umsatz von 35 Gew.%, bezogen auf Styrol, d.h. in Masse, polymerisiert. Bei Durchführung der Polymerisation ohne Starter wurde die Reaktion bei 123°C in Gegenwart von 0,1 % tert.-Dodecylmercaptan als Regler ausgeführt (Vergleichsversuche I und II). Danach wird in wäßriger Suspension weiterpolymerisiert. Hierzu werden 0,1 Teile Benzoylperoxid und pro Kilogramm des Ansatzes 900 ml Wasser, 9,0 g eines Suspensionshilfsmittels auf Basis von Ethylenoxid (®Luviskol K 90) und 1,8 g Natriumphosphat zugegeben. In Suspension wurde bei einem Füllgrad von 90 % bei 300 Rührerumdrehungen/Minute jeweils isotherm 3 Stunden bei 110°C, 3 Stunden bei 130°C und 4 Stunden bei 140°C bis zu einem Umsatz von 100 %, bezogen auf Styrol, polymerisiert.

6

Beispiele 1 und 2

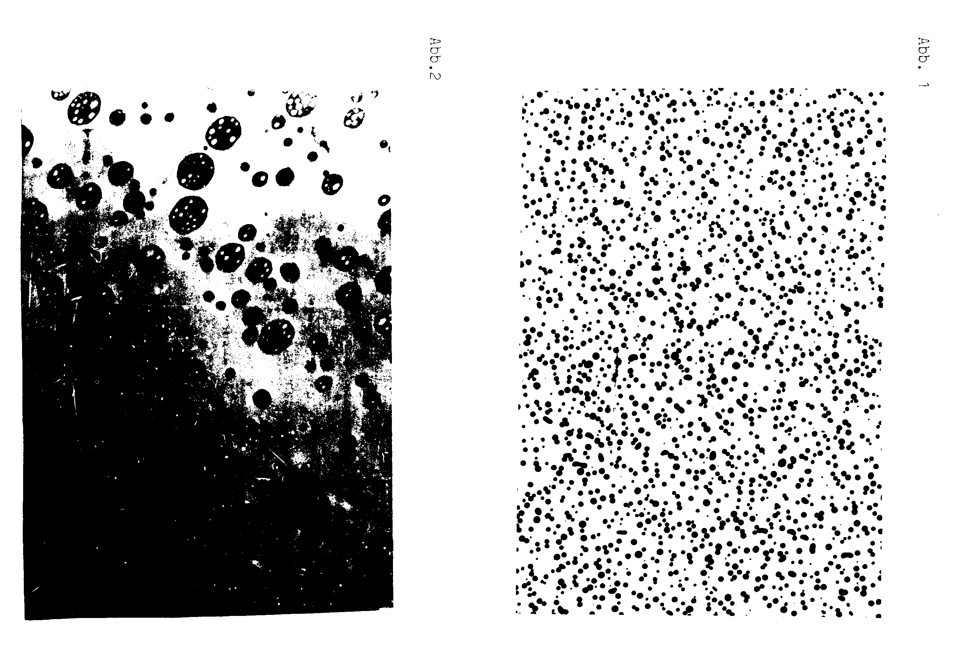

In beiden Versuchen wurden Polybutadiene im beanspruchten Bereich des Molekulargewichts $\overline{M}_w$ von 36.000 und 99.000 eingesetzt und nach der angegebenen Vorschrift in Gegenwart von 0,1 % BPO als Initiator umgesetzt. Bei beiden Ansätzen entsteht praktisch ausschließlich (100 % Zahlenmittel) die bereits beschriebenen Tropfenteilchenmorphologie. Abb. 1 zeigt eine elektronenmikroskopische Aufnahme des Produkts aus Beispiel 2. Die analoge Morphologie entsteht in Beispiel 1.

Wie den $d_{50}$-Werten von Tabelle 2 zu entnehmen ist, liegen die bildanalytisch bestimmten mittleren Teilchengrößen bei 0,17 bzw. 0,14 $\mu$m, sind also am geringsten im Vergleich zu den anderen Vergleichsversuchen, die andere Morphologien besitzen. Dies spiegelt sich auch wider in den Werten für die Streckspannung, die bei diesen beiden Beispielen am höchsten sind.

Die geringe Größe der Teilchen bedeutet, wie dem Fachmann sofort einsichtig ist, daß damit über ein einfaches Verfahren unter Verwendung von Homopolybutadien anstelle von Blockkautschuken, hochglänzende Produkte zugänglich sind, wie sie für Tropfenteilchenmorphologie typisch ist. Der geringe Durchmesser der Kautschukteilchen führt weiterhin dazu, daß Produkte mit erhöhter Transluzenz entstehen, wie die Transluzenzwerte von 8 bzw. 5,5 zeigen.

Vergleichsversuche I und II

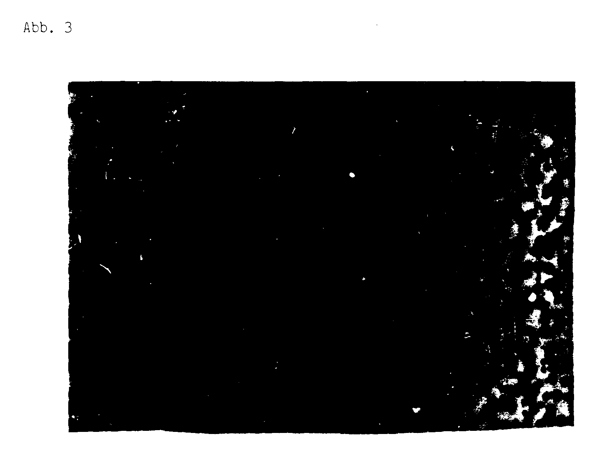

Diese Vergleichsversuche sollen belegen, daß die peroxidische Initiierung für die Ausbildung von Tropfenteilchen essentiell ist. In Vergleichsversuch II bilden sich die typischen Zellenteilchen, d.h. Polystyrol-Okklusionen enthaltende Kautschukteilchen (vgl. Abb. 2). Ihre Teilchengröße liegt bei 2,3 $\mu$m, der Glanz ist schlecht.

In Vergleichsversuch I, bei Einsatz des Kautschuks mit $\overline{M}_w$ = 36.000, bilden sich ebenfalls keine Tropfenteilchen, sondern es entstehen aufgrund ungenügender Pfropfung und schlechter Vernetzung des niedermolekularen Polybutadiens koaleszierte, unregelmäßig geformte Partikel der Weichkomponente.

In beiden Beispielen ist der Transluzenzwert > 9, wie bei thermisch gefahrenen Ansätzen üblich.

Vergleichsversuch III

Dieser Versuch zeigt, daß die Bildung von Tropfenteilchen an den angegebenen Molgewichtsbereich des Polybutadien gebunden ist. Das Molekulargewicht des hier eingesetzten Polybutadiens von 170.000 liegt außerhalb dieses Bereiches, so daß sich keine Tropfenteilchen mehr bilden, sondern die auch bei Einsatz kommerzieller Kautschuke bekannten Kapselteilchen entstehen, eine Morphologie bei der die Weichkomponentenpartikel lediglich eine Polystyrolokklusion enthalten, die von einer dünnen Kautschukhülle umgeben ist (vgl. Abb. 3).

Vergleichsversuch IV

Dieser Versuch zeigt, daß in Mischungen aus einem Polybutadien, das zu Trofenteilchenmorphologien führen sollte und solche, die aufgrund ihres Molekulargewichts andere Morphologien bilden, die auftretende Weichkomponentenstruktur vom mittleren Molekulargewicht der Mischung bestimmt wird. Dieses beträgt im vorliegenden Beispiel 180.000, entspricht damit nahezu Vergleichsversuch III und es bildet sich daher wie dort eine reine Kapselteilchenstruktur der Weichkomponente aus. Für den Morphologietyp ist also nicht die Breite der Verteilung des Polybutadiens entscheidend, sondern das mittlere Molekulargewicht (Gewichtsmittel). Es kommt zu keiner Ausbildung von Mischmorphologien.

In den Abbildungen 1 bis 3 wurde jeweils die Vergrößerung 1:10.000 gewählt, so daß 1 $\mu$m einem Zentimeter entspricht.

Tabelle 2

| | Beispiele | | Vergleichsversuche | | | |
|---|---|---|---|---|---|---|
| | 1 | 2 | I | II | III | IV |
| Polybutadien (Gew.-Teile) | 8 | 8 | 8 | 8 | 8 | 8 |
| Art PB | $b_1$ | $b_2$ | $b_1$ | $b_2$ | $b_3$ | $1/3$ $(b_2+b_3+b_4)$ |
| BPO (%) | 0,1 | 0,1 | - | - | 0,1 | 0,1 |
| TDM (%) | - | - | 0,1 | 0,1 | - | - |
| Streckspannung (N/mm$^2$) | 35,3 | 34,3 | 29,1 | 26,2 | 33,9 | 33,0 |
| Reißfestigkeit (%) | 30,1 | 28,5 | 20,9 | 19,1 | 27,5 | 32,6 |
| Reißdehnung (%) | 7,0 | 8,0 | 9,6 | 9,7 | 9,0 | 4,9 |
| Vicattemp. (°C) | 91,0 | 93,0 | 86,8 | 89,1 | 91,6 | 91,3 |
| $a_{KL}$ (kJ/m$^2$) | 5,1 | 5,7 | 3,8 | 8,7 | 7,1 | 8,8 |
| Transluzenz | 8 | 5,5 | >9 | >9 | 4 | 4,5 |
| $d_{50}$ ($\mu$m) | 0,17 | 0,14 | 0,28 | 2,3 | 0,20 | 0,24 |
| Morphologie der Teilchen | Tropfen | Tropfen | nicht def. | Zellen | Kapsel | Kapsel |

**Patentansprüche**

**1.** Schlagfeste thermoplastische Formmasse, enthaltend, jeweils bezogen auf die Formmasse aus A + B,

A) eine Hartmatrix aus mindestens einem Polymeren eines Monovinylaromaten in einem Anteil von 60 bis 95 Gew.% und

B) eine darin verteilte Weichphase in einem Anteil von 5 bis 40 Gew.%, mit der Maßgabe daß

die Weichsphase aus Tropfenteilchen besteht, die eine mittlere Teilchengröße, bestimmt als d-Wert des Volumenmittels zu mehr als 80 % (Zahlenmittel) im Bereich von 0,01 bis 0,3 $\mu$m aufweisen, und wobei die Weichphase mindestens ein Pfropfmischpolymerisat aus dem das Polymere der Hartmatrix aufbauenden Monomeren und einem elastomeren Polymerisat darstellt,

wie sie erhalten wird durch mit peroxidischen Initiatoren gestartete radikalische Polymerisation des die Hartmatrix A aufbauenden monovinylaromatischen Monomeren in Gegenwart von ausschließlich Homopolybutadien, das ein mittleres Molekulargewicht (Gewichtsmittel) von 35.000 bis 100.000 aufweist, in der Weise, daß in einer ersten Stufe innerhalb von 3 bis 6 Stunden bei einer Temperatur von 50 bis 200 °C in Lösung unter Rühren bis zu einem Umsatz von 20 bis 40 % und Phasenumkehr und danach in einer zweiten Stufe in wäßriger Suspension polymerisiert wird.

**2.** Verwendung der Formmasse nach Anspruch 1 zur Herstellung von geformten Gebilden.

**Claims**

**1.** An impact resistant thermo-plastic molding material containing, based in each case on the molding material of

A + B,

A) a hard matrix of at least one polymer of a monovinylaromatic in an amount of from 60 to 95% by weight and

B) a soft phase, distributed therein, in an amount of from 5 to 40% by weight, with the proviso that the soft phase consists of drop particles, more than 80% (number average) of which have a mean particle size, determined as the d value of the volume average, of from 0.01 to 0.3 $\mu$m, the soft phase

comprising at least one graft copolymer of the monomer forming the polymer of the hard matrix and one elastomeric polymer,

as obtained by peroxide-initiated free radical polymerization of the monovinylaromatic monomer forming the hard matrix A, in the presence of exclusively homopolybutadiene which has a weight average molecular weight of from 35,000 to 100,000, in such a manner that polymerization is carried out in a first stage in the course of from 3 to 6 hours at from 50 to 200°C in solution while stirring until a conversion of from 20 to 40% and phase inversion have been achieved and polymerization is then effected in a second stage in aqueous suspension.

2. Use of a molding material as claimed in claim 1 for the production of shaped structures.

**Revendications**

1. Matière à mouler thermoplastique, résistant au choc, qui contient, à chaque fois par rapport à la matière à mouler constituée de A + B,

A) une matrice dure d'au moins un polymère d'un monomère vinylaromatique en une proportion de 60 à 95% en poids et

B) une phase molle qui y est répartie en une proportion de 5 à 40% en poids, avec la condition que la phase molle se compose de particules en forme de gouttelettes qui possèdent un calibre moyen, déterminé sous forme de valeur d de la moyenne volumique pour plus de 80% (moyenne en nombre) qui fluctue dans la plage de 0,01 à 0,3 um et la phase molle constitue au moins un copolymère de greffage entre un polymère élastomère et le monomère constituant la matrice dure du polymère,

comme on l'obtient par la polymérisation radicalaire amorcée par des amorceurs peroxydiques du monomère monovinylaromatique constituant la matrice dure A, en la présence exclusive d'homopolybutadiène qui possède un poids moléculaire moyen (moyenne en poids) de 35.000 à 100.000, en une manière telle qu'au cours d'une première étape, on procède à la polymérisation en l'espace de 3 à 6 heures et à une température de 50 à 200°V, en solution et sous agitation, jusqu'à une conversion de 20 à 40% et une inversion de phases et on poursuit ensuite la polymérisation en suspension aqueuse au cours d'une seconde étape.

2. Utilisation de la matière à mouler selon la revendication 1 pour la fabrication d'articles moulés.

Abb. 1

Abb.2

Abb. 3